# EUROPÄISCHE PATENTSCHRIFT

(11) **EP 2 112 978 B1**
(45) Veröffentlichungstag und Bekanntmachung des Hinweises auf die Patenterteilung: **26.10.2011**
(21) Anmeldenummer: 07846939.2
(22) Anmeldetag: 01.12.2007
(51) Int. Cl.: B60Q 1/12, B60Q 1/18, F21V 29/00

(54) **KRAFTFAHRZEUGSCHEINWERFER**
MOTOR VEHICLE HEADLIGHT
PHARE DE VÉHICULE AUTOMOBILE

(30) Priorität: 16.12.2006 DE 102006059592
(43) Veröffentlichungstag der Anmeldung: 04.11.2009
(73) Patentinhaber: Bayerische Motoren Werke Aktiengesellschaft, 80809 München (DE)
(72) Erfinder: ERDL, Helmut, 83569 Vogtareuth (DE); ENDERS, Martin, 82041 Deisenhofen (DE); KUHL, Patrick, 81371 München (DE)
(74) Vertreter: Mayer-Martin, Christian
(86) Internationale Anmeldenummer: PCT/EP2007/010450
(87) Internationale Veröffentlichungsnummer: WO 2008/074392

(56) Entgegenhaltungen:
- EP-A- 1 270 324
- EP-A- 1 298 385
- EP-A- 1 323 570
- EP-A- 1 726 874
- WO-A-2006/016327
- DE-A1-102004 046 764
- DE-A1-102005 041 065
- DE-A1-102006 051 030
- JP-A- 2000 235 803
- US-A1- 2004 240 219
- US-A1- 2006 274 544
- US-B1- 7 237 936

## Beschreibung

Die Erfindung betrifft einen Kraftfahrzeugscheinwerfer mit einer Basis-Lichtquelle und einer Infrarot-Strahlquelle.

Die rasante technologische Entwicklung auf dem Gebiet der Kraftfahrzeugbeleuchtungstechnik führte in den letzten Jahren zur Integration einer zunehmenden Anzahl von Funktionalitäten in einen Kraftfahrzeugscheinwerfer.

So sind bereits Kraftfahrzeugscheinwerfer bekannt, welche Infrarotstrahlung abstrahlen, um diese im Rahmen eines kamerabasierten Fahrerassistenzsystems bei Dunkelheit, insbesondere für ein aktives Nachtsichtsystem, zu nützen. Dabei wird von Objekten oder Passanten reflektierte Infrarotstrahlung durch eine Sensoreinrichtung erfasst, in Bilder der Objekte oder Passanten umgesetzt, und diese auf einer Anzeigeeinrichtung dargestellt.

Zudem werden derzeit Kraftfahrzeugscheinwerfer vorgeschlagen, die über ein so genanntes Abbiegelicht (Cornering light) verfügen. Das Abbiegelicht kann beispielsweise einseitig, abhängig von der Kurvenbewegung, links bzw. rechts in die Kurve hinein scheinen. Das Abbiegelicht wird beispielsweise durch Betätigen des Blinkers oder automatisch durch eine eigenständige Elektronik bei Kurvenfahrt aktiviert. Es kann vorgesehen sein, dass das Abbiegelicht nur bis zu einer Geschwindigkeit von beispielsweise 40 km/h aktiviert sein darf. Die Aktivierung kann schlagartig erfolgen.

Aus der EP-A1-1323570 ist ein Scheinwerfer mit einem ersten Lichtmodul und einem zweiten Lichtmodul bekannt, das eine Abbiegelichtquelle und eine Infrarotstrahlquelle umfasst.

Die US2006/274544 offenbart einen Kühlkörper, der nicht immer in der Lage ist, gleichzeitig alle ihm zugeordneten Lichtquellen zu kühlen.

Der Erfindung liegt nun die Aufgabe zu Grunde, einen Kraftfahrzeugscheinwerfer anzugeben, der flexibel und wirtschaftlich einsetzbar ist.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, zur Einsparung von Bauraum und Kosten in einem Lichtmodul zwei Lichtquellen, insbesondere eine Abbiegelichtquelle und eine Infrarotstrahlquelle, anzuordnen.

Aufgrund des technischen Fortschritts in den letzten Jahren ist es möglich geworden, die Leuchtfunktionen Fernlicht und Abblendlicht durch ein einziges Lichtmodul, beispielsweise ein so genanntes Bi-Xenon Lichtmodul, zu realisieren. Es besteht nun allerdings der Wunsch, weitere Leuchtfunktionen in einen Kraftfahrzeugscheinwerfer zu integrieren. Insbesondere für Kraftfahrzeughersteller, deren Scheinwerferdesign geprägt ist durch zwei nebeneinander platzierte Lichtmodule ist es daher vorteilhaft, ein erstes Lichtmodul zur Realisierung eines Abblendlichtes und eines Fernlichtes und ein zweites Lichtmodul, das eine Abbiegelichtquelle und eine Infrarotstrahlquelle umfasst, innerhalb eines Kraftfahrzeugscheinwerfers vorzusehen. Zudem ist eine Steuereinrichtung des zweiten Lichtmoduls derart ausgeführt, dass in Abhängigkeit von der Fahrsituation, dem aktuellen Ort und/oder der Fahrgeschwindigkeit automatisch von der Abbiegelichtquelle auf die Infrarotstrahlquelle umgeschaltet wird und umgekehrt, wobei auch für einen vorgegebenen Zeitraum, eine vorgegeben Strecke und/oder einen vorgegeben Geschwindigkeitsbereich vorübergehend die Abbiegelichtquelle und die Infrarotstrahlquelle aktiviert sein können. Dadurch kann die Designtradition aufrechterhalten bleiben, und weitere Leuchtfunktionen technisch und ökonomisch effizient in einen Kraftfahrzeugscheinwerfer integriert werden.

Vorzugsweise weist der Kraftfahrzeugscheinwerfer, insbesondere das zweite Lichtmodul, zumindest ein optisches System, insbesondere ein Linsensystem und/oder ein Reflektorsystem auf, das derart ausgeführt und angeordnet ist, dass sich die durch das optische System beeinflussten im Wesentlichen jeweils parallelen Strahlenbündel der Infrarotstrahlquelle und der Abbiegelichtquelle kreuzen. Beispielsweise repräsentieren die sich kreuzenden Strahlenbündel mindestens 50%, 70% oder 90% der von der jeweiligen Quelle stammenden Lichtleistung bzw. Infrarotstrahlungsleistung.

Dadurch wird erreicht, dass auf einfache und bauraumsparende Weise zwei Leuchtfunktionen realisiert werden, von denen eine Leuchtfunktion eher nach vorne und die andere Leuchtfunktion eher zur Seite gerichtet ist. Abschattungseffekte hinsichtlich der von der Abbiegelichtquelle stammenden Strahlen können dadurch auf einfache Weise ohne störenden Eingriff in das Scheinwerferdesign reduziert werden.

Besonders bevorzugt ist vorgesehen, dass das optische System derart ausgeführt und angeordnet ist, dass Strahlen der Abbiegelichtquelle und der Infrarotstrahlquelle durch das gleiche optische System, das vorteilhafterweise einstückig, insbesondere als eine Linse oder als ein Reflektor, ausgebildet sein kann, abgelenkt werden. Dadurch können Herstellungskosten, Bauraum und Gewicht eingespart werden, und die Zuverlässigkeit des Scheinwerfers erhöht werden.

Gemäß einer bevorzugten Ausgestaltung liegen die Abbiegelichtquelle und die Infrarotstrahlquelle im Wesentlichen auf oder in der Nähe der Brennebene des optischen Systems, wodurch zwei im Wesentlichen parallele Strahlenbündel erzeugt werden können. Der Begriff "Im Wesentlichen parallel" umfasst im Rahmen der Erfindung vorzugsweise Strahlenbündel, die im Kraftfahrzeugbereich typischerweise von einem Lichtmodul, insbesondere einem Abbiegelichtmodul oder einem Infrarot-Strahlmodul, abgestrahlt werden.

Alternativ oder ergänzend dazu liegt die Infrarotstrahlquelle im Wesentlichen auf der optischen Achse des optischen Systems, und liegt die Abbiegelichtquelle nicht auf der optischen Achse des optischen Systems, insbesondere liegt die Infrarotstrahlquelle näher an der der optischen Achse des optischen Systems als die Abbiegelichtquelle. Dadurch wird erreicht, dass die Infrarotstrahlung eher nach vorne und das Abbieglicht eher zur Seite hin abgestrahlt werden.

Das optische System weist vorzugsweise ein erstes und ein zweites optisches Teilsystem auf, wobei die Abbiegelichtquelle im Wesentlichen auf oder in der Nähe der Brennebene des ersten Teilsystems liegt, und wobei die Infrarotstrahlquelle im Wesentlichen auf oder in der Nähe der Brennebene des zweiten Teilsystems liegt, wodurch wieder zwei im Wesentlichen parallele Strahlenbündel erzeugt werden können. Dabei können wieder die Infrarotstrahlquelle im Wesentlichen auf der optischen Achse des zweiten optischen Teilsystems und die Abbiegelichtquelle nicht auf der optischen Achse des ersten optischen Teilsystems liegen.

Um Kosten, Bauraum und Gewicht zu sparen, ist vorzugsweise ein Kühlkörper (Kühleinrichtung oder Trägerelement) vorgesehen, durch den die Abbiegelichtquelle und die Infrarotstrahlquelle mittelbar oder unmittelbar getragen werden. Der Kühlkörper oder das Trägerelement sind vorteilhafterweise derart ausgeführt und relativ zu dem optischen System angeordnet, dass sich die durch das optische System beeinflussten im Wesentlichen jeweils parallelen Strahlenbündel der Infrarotstrahlquelle und der Abbiegelichtquelle kreuzen.

Der Kühlkörper ist zur Kosten-, Gewichts und Bauraumreduktion vorteilhafterweise derart ausgeführt und angeordnet, dass er nicht zur gleichzeitigen dauerhaften (beispielsweise länger als 2 Minute, 5 Minuten, 20 Minuten oder 60 Minuten) und/oder zuverlässigen Kühlung der aktiven Abbiegelichtquelle und der aktiven Infrarotstrahlquelle ausreicht. Dies ist insbesondere dann sinnvoll, wenn die Abbiegelichtquelle nicht immer dann aktiv ist, wenn die Infrarotstrahlquelle aktiv ist, insbesondere die Abbiegelichtquelle automatisch inaktiv ist, wenn die Infrarotstrahlquelle aktiv ist, oder wenn die, Infrarotstrahlquelle nicht immer dann aktiv ist, wenn die Abbiegelichtquelle aktiv ist, insbesondere die Infrarotstrahlquelle automatisch inaktiv ist, wenn die Abbiegelichtquelle aktiv ist. Für die Einhaltung dieser Regeln kann beispielsweise eine entsprechend eingerichtete Steuereinrichtung sorgen.

Das erste bzw. das zweite optische Teilsystem sind vorzugsweise jeweils integraler Bestandteil der Abbiegelichtquelle bzw. der Infrarotstrahlquelle oder sind fest mit der Abbiegelichtquelle bzw. der Infrarotstrahlquelle verbunden. Dabei können die Abbiegelichtquelle und/oder die Infrarotstrahlquelle mindestens zwei Teil-Abbiegelichtquellen oder Teil-Infrarotstrahlquellen umfassen.

Im Folgenden wird die Erfindung anhand von Beispielen unter Bezugnahme auf die folgenden Figuren näher erläutert:

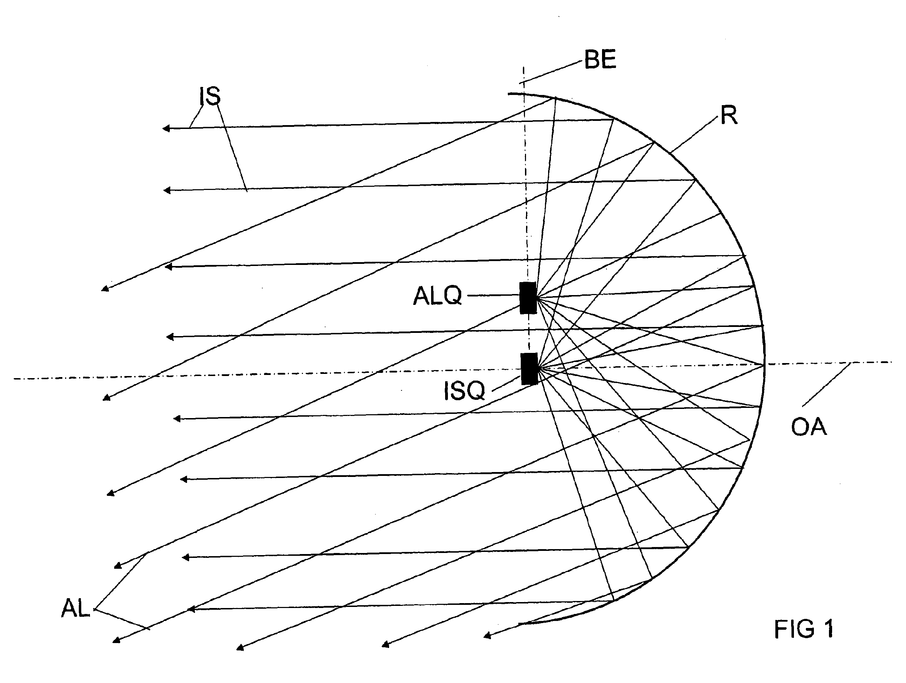

- Figuren 1 bis 5: zeigen jeweils vereinfachte schematische Schnittdarstellungen verschiedener Lichtmodulvarianten.

In Figur 1 ist ein Lichtmodul (zweites Lichtmodul) im Schnitt von oben dargestellt, das eine Abbiegelichtquelle ALQ und eine Infrarotstrahlquelle ISQ aufweist. Als optisches System ist ein Reflektor R vorgesehen. Die Infrarotstrahlquelle ISQ und die Abbiegelichtquelle ALQ liegen nahe oder auf der Brennebene BE des Reflektors R. Die Infrarotstrahlquelle ISQ liegt auf der optischen Achse OA des Reflektors R, und die Abbiegelichtquelle ALQ liegt neben der optischen Achse OA des Reflektors R. Das Infrarot-Strahlenbündel IS wird nach Ablenkung durch den Reflektor R in sich parallel im Wesentlichen nach vorne abgestrahlt. Das Abbiegelicht-Strahlenbündel AL wird nach Ablenkung durch den Reflektor R in sich parallel im Wesentlichen zur Seite abgestrahlt. Neben diesem Lichtmodul kann ein Kraftfahrzeugscheinwerfer noch ein nicht dargestelltes weiteres Lichtmodul (erstes Lichtmodul) umfassen, mittels dessen ein Abblendlicht und ein Fernlicht realisiert werden.

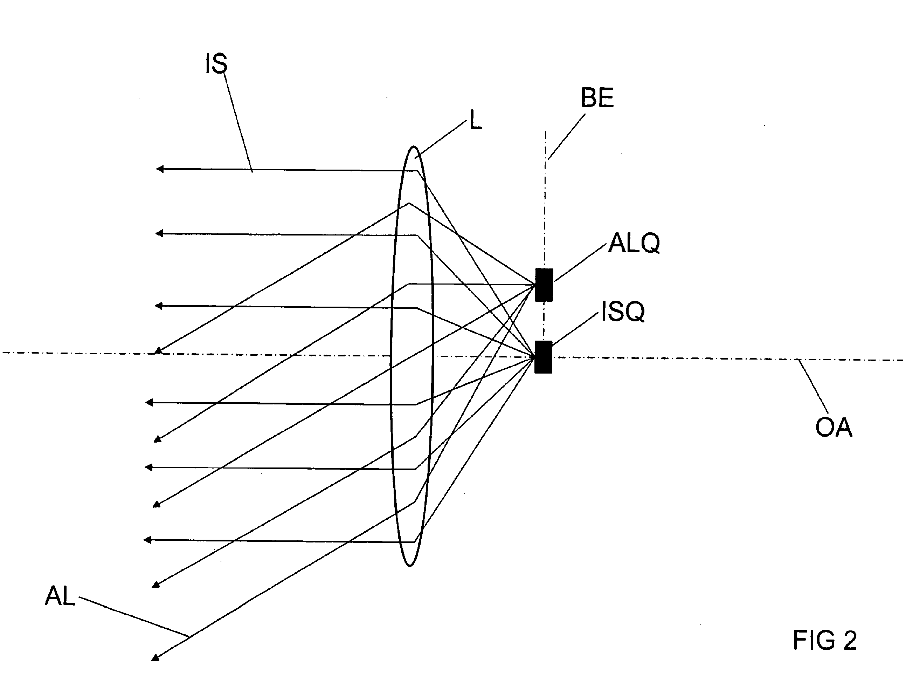

Figur 2 zeigt ein Lichtmodul im Schnitt von oben, das im Wesentlichen dem Lichtmodul aus Figur 1 entspricht. Lediglich der Reflektor wurde durch eine Linse L ersetzt. Die übrigen Bezugszeichen bezeichnen die gleichen Elemente wie in Figur 1, wobei die Elemente aber anders ausgeführt sein können.

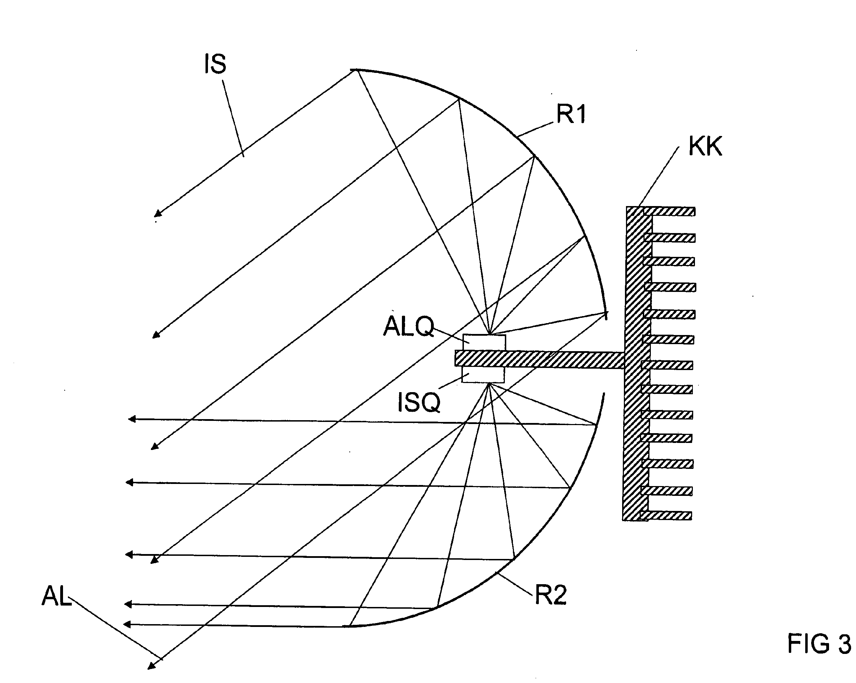

Figur 3 zeigt ebenfalls ein Lichtmodul im Schnitt von oben, das im Wesentlichen dem Lichtmodul aus Figur 1 entspricht. Lediglich der Reflektor ist durch zwei Teil-Reflektoren R1,R2 ersetzt, und die Infrarotstrahlquelle ISQ und die Abbiegelichtquelle ALQ werden nun durch einen gemeinsamen Kühlkörper KK getragen. Die übrigen Bezugszeichen bezeichnen die gleichen Elemente wie in Figur 1, wobei die Elemente aber anders ausgeführt sein können.

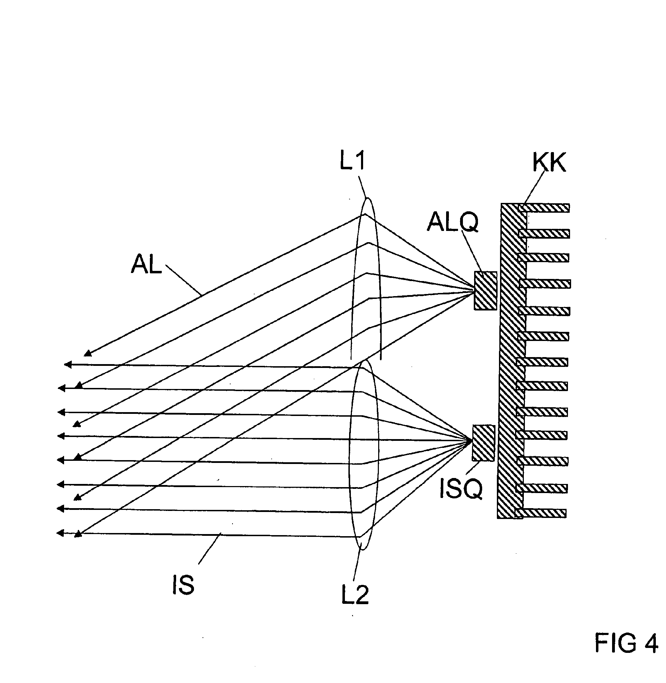

Das in Figur 4 im Schnitt von oben dargestellte Lichtmodul entspricht im Wesentlichen dem Lichtmodul aus Figur 3. Lediglich die zwei Teil-Reflektoren sind durch zwei Teil-Linsen L1,L2 ersetzt. Die übrigen Bezugszeichen bezeichnen die gleichen Elemente wie in Figur 3, wobei die Elemente aber anders ausgeführt sein können.

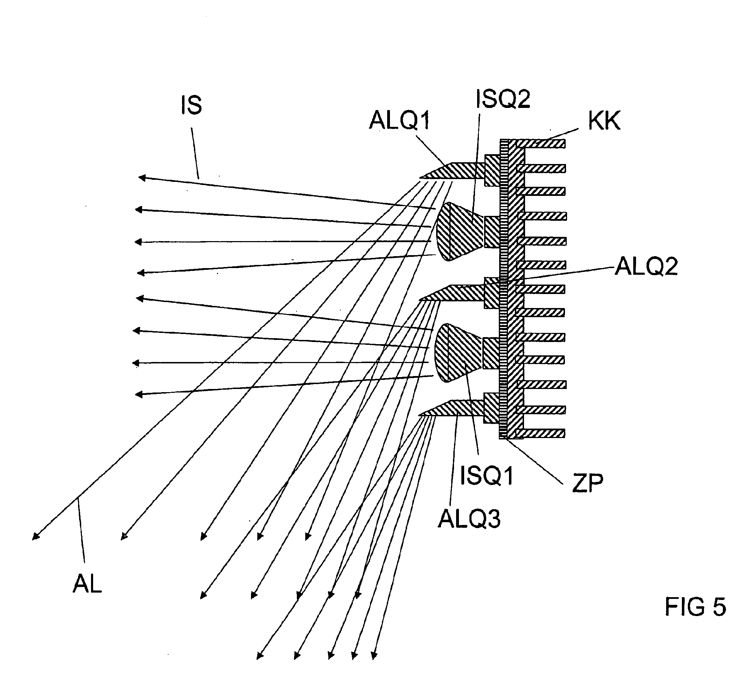

In Figur 5 ist ein Lichtmodul im Schnitt von oben dargestellt, das mehrere Infrarotstrahlquellen ISQ1,ISQ2 und mehrere Abbiegelichtquellen ALQ1,ALQ2,ALQ3 aufweist. In die Infrarotstrahlquellen ISQ1,ISQ2 und die Abbiegelichtquellen ALQ1,ALQ2,ALQ3 ist jeweils ein optisches Teilsystem integriert, das derart ausgelegt ist, dass - beispielsweise basierend auf Brechungs- oder Reflexionsvorgängen an geeignet ausgeführten Grenzflächen - das Abbiegelicht AL zur Seite und die Infrarotstrahlen IS nach vorne abgestrahlt werden. Die Infrarotstrahlquellen ISQ1,ISQ2 und die Abbiegelichtquellen ALQ1,ALQ2,ALQ3 werden durch eine gemeinsame Zentralplatine ZP getragen, die wiederum durch eine gemeinsame Kühleinrichtung KK getragen und gekühlt wird. Die übrigen Bezugszeichen bezeichnen die gleichen Elemente wie in Figur 1, wobei die Elemente aber anders ausgeführt sein können.

## Patentansprüche

1. Kraftfahrzeugscheinwerfer
mit einem ersten Lichtmodul zur Realisierung eines Abblendlichtes und eines Fernlichtes,
mit einem zweiten Lichtmodul, das eine Abbiegelichtquelle (ALQ) und eine Infrarotstrahlquelle (ISQ) umfasst, und
mit einer Steuereinrichtung zur Steuerung des zweiten Lichtmoduls, **dadurch gekennzeichnet, dass**
die Steuereinrichtung derart eingerichtet ist, dass in Abhängigkeit von der Fahrsituation, dem aktuellen Ort und/oder der Fahrgeschwindigkeit von der Abbiegelichtquelle (ALQ) auf die Infrarotstrahlquelle (ISQ) umgeschaltet wird und umgekehrt.

2. Kraftfahrzeugscheinwerfer nach Anspruch 1,
mit zumindest einem optischen System, insbesondere einem Linsensystem (L) und/oder einem Reflektorsystem (R), das derart ausgeführt und angeordnet ist, dass sich die durch das optische System beeinflussten Strahlenbündel der Infrarotstrahlquelle (ISQ) und der Abbiegelichtquelle (ALQ) kreuzen.

3. Kraftfahrzeugscheinwerfer nach einem der vorhergehenden Ansprüche, bei dem das optische System derart ausgeführt und angeordnet ist, dass Strahlen der Abbiegelichtquelle (ALQ) und der Infrarotstrahlquelle (ISQ) durch das gleiche optische System abgelenkt werden.

4. Kraftfahrzeugscheinwerfer nach einem der vorhergehenden Ansprüche, bei dem die Abbiegelichtquelle (ALQ) und die Infrarotstrahlquelle (ISQ) auf der Brennebene des optischen Systems liegen.

5. Kraftfahrzeugscheinwerfer nach einem der vorhergehenden Ansprüche, bei dem die Infrarotstrahlquelle (ISQ) auf der optischen Achse des optischen Systems liegt, und bei dem die Abbiegelichtquelle (ALQ) nicht auf der optischen Achse des optischen Systems liegt.

6. Kraftfahrzeugscheinwerfer nach einem der vorhergehenden Ansprüche, bei dem das optische System ein erstes und ein zweites optisches Teilsystem aufweist, wobei die Abbiegelichtquelle (ALQ) auf der Brennebene des ersten Teilsystems liegt, und wobei die Infrarotstrahlquelle (ISQ) auf der Brennebene des zweiten Teilsystems liegt.

7. Kraftfahrzeugscheinwerfer nach einem der vorhergehenden Ansprüche, mit einem Kühlkörper (KK), durch den die Abbiegelichtquelle (ALQ) und die Infrarotstrahlquelle (ISQ) getragen werden.

8. Kraftfahrzeugscheinwerfer nach einem der vorhergehenden Ansprüche, wobei der Kühlkörper derart ausgeführt und relativ zu dem optischen System angeordnet ist, dass sich die durch das optische System beeinflussten Strahlenbündel der Infrarotstrahlquelle (ISQ) und der Abbiegelichtquelle (ALQ) kreuzen.

9. Kraftfahrzeugscheinwerfer nach einem der vorhergehenden Ansprüche, dass der Kühlkörper derart ausgeführt und angeordnet ist, dass sie nicht zur gleichzeitigen dauerhaften Kühlung der aktiven Abbiegelichtquelle (ALQ) und der aktiven Infrarotstrahlquelle (ISQ) ausreicht.

10. Kraftfahrzeugscheinwerfer nach einem der vorhergehenden Ansprüche, der derart ausgeführt ist, dass die Abbiegelichtquelle (ALQ) nicht immer dann aktiv ist, wenn die Infrarotstrahlquelle (ISQ) aktiv ist.

11. Kraftfahrzeugscheinwerfer nach einem der vorhergehenden Ansprüche, bei dem das erste bzw. das zweite optische Teilsystem jeweils integraler Bestandteil der Abbiegelichtquelle (ALQ) bzw. der Infrarotstrahlquelle (ISQ) sind oder fest mit der Abbiegelichtquelle (ALQ) bzw. der Infrarotstrahlquelle (ISQ) verbunden sind.

12. Kraftfahrzeugscheinwerfer nach einem der vorhergehenden Ansprüche, bei dem die Abbiegelichtquelle (ALQ) und/oder die Infrarotstrahlquelle (ISQ) mindestens zwei Teil-Abbiegelichtquellen oder Teil-Infrarotstrahlquellen umfasst.

## Claims

1. A motor vehicle headlight with a first light module for implementing a dipped beam and a main beam, with a second light module comprising a cornering light source (ALQ) and an infrared beam source (ISQ), and with a control device for controlling the second light module, **characterised in that** the control device is set up in such a way that, depending on the driving situation, the current site and/or the driving speed, a switch is made from the cornering light source (ALQ) to the infrared beam source (ISQ) and vice versa.

2. A motor vehicle headlight according to claim 1, with at least one optical system, especially a lens system (L) and/or a reflector system (R), which is configured and arranged in such a way that the beam bundles of the infrared beam source (ISQ) and the cornering light source (ALQ), which are influenced by the optical system, intersect.

3. A motor vehicle headlight according to any one of the preceding claims, wherein the optical system is configured and arranged in such a way that beams of the cornering light source (ALQ) and the infrared beam source (ISQ) are deflected by the same optical system.

4. A motor vehicle headlight according to any one of the preceding claims, wherein the cornering light source (ALQ) and the infrared beam source (ISQ) are located on the focal plane of the optical system.

5. A motor vehicle headlight according to any one of the preceding claims, wherein the infrared beam source (ISQ) is located on the optical axis of the optical system, and wherein the cornering light source (ALQ) is not located on the optical axis of the optical system.

6. A motor vehicle headlight according to any one of the preceding claims, wherein the optical system has a first and a second optical part system, the cornering light source (ALQ) being located on the focal plane of the first part system, and wherein the infrared beam source (ISQ) is located on the focal plane of the second part system.

7. A motor vehicle headlight according to any one of the preceding claims, with a cooling body (KK), by means of which the cornering light source (ALQ) and the infrared beam source (ISQ) are carried.

8. A motor vehicle headlight according to any one of the preceding claims, wherein the cooling body is configured and arranged relative to the optical system in such a way that the beam bundles of the infrared beam source (ISQ) and the cornering light source (ALQ), which are influenced by the optical system, intersect.

9. A motor vehicle headlight according to any one of the preceding claims, wherein the cooling body is configured and arranged in such a way that it is not sufficient for the simultaneous permanent cooling of the active cornering light source (ALQ) and the active infrared beam source (ISQ).

10. A motor vehicle headlight according to any one of the preceding claims, which is configured in such a way that the cornering light source (ALQ) is not always active when the infrared beam source (ISQ) is active.

11. A motor vehicle headlight according to any one of the preceding claims, wherein the first and second optical part system are in each case an integral component of the cornering light source (ALQ) or the infrared beam source (ISQ) or are rigidly connected to the cornering light source (ALQ) or the infrared beam source (ISQ).

12. A motor vehicle headlight according to any one of the preceding claims, wherein the cornering light source (ALQ) and/or the infrared beam source (ISQ) comprises at least two part cornering light sources or part infrared beam sources.

## Revendications

1. Projecteur de véhicule automobile comprenant :
- un premier module lumineux pour former un faisceau de feux de croisement et de feux de route,
- un second module lumineux comportant une source de lumière défléchie (ALQ) et une source de lumière infrarouge (ISQ), et
- l'installation de commande est conçue pour, qu'en fonction de la situation de roulage, l'emplacement instantané/la vitesse de circulation on commute de la source de lumière défléchie (ALQ) sur la source de lumière infrarouge (ISQ).

2. Projecteur de véhicule automobile selon la revendication 1, **caractérisé en ce qu'**il comprend :
au moins un système optique notamment un système de lentilles (L) et/ou un système de réflecteur (R) réalisé et installé de façon que les faisceaux de rayon influencés par le système optique de la source de lumière infrarouge (ISQ) et de la source de lumière défléchie (ALQ) se croisent.

3. Projecteur de véhicule automobile selon l'une des revendications précédentes,
**caractérisé en ce que**
le système optique est réalisé et installé pour que les rayons de la source de lumière défléchie (ALQ) et la source de lumière infrarouge (ISQ) soient déviées par le même système optique.

4. Projecteur de véhicule automobile selon l'une des revendications précédentes,
**caractérisé en ce que**
la source de lumière défléchie (ALQ) et la source de lumière infrarouge (ISQ) sont situées dans le plan focal du système optique.

5. Projecteur de véhicule automobile selon l'une des revendications précédentes,
**caractérisé en ce que**
la source de lumière infrarouge (ISQ) se situe sur l'axe optique du système optique et la source de lumière défléchie (ALQ) n'est pas sur l'axe optique du système optique.

6. Projecteur de véhicule automobile selon l'une des revendications précédentes,
**caractérisé en ce que**
le système optique comporte une première partie et une seconde partie de système optique,
la source de lumière défléchie (ALQ) se situe dans le plan focal de la première partie du système et la source de lumière infrarouge (ISQ) se trouve dans le plan focal de la seconde partie du système.

7. Projecteur de véhicule automobile selon l'une des revendications précédentes,
**caractérisé en ce que**
il comporte un corps de refroidissement (KK) portant la source de lumière défléchie (ALQ) et la source de lumière infrarouge (ISQ).

8. Projecteur de véhicule automobile selon l'une des revendications précédentes,
**caractérisé en ce que**
le corps de refroidissement est réalisé et installé par rapport au système optique de façon que les faisceaux de rayons influencés par le système optique provenant de la source de lumière infrarouge (ISQ) et la source de lumière défléchie (ALQ) se croisent.

9. Projecteur de véhicule automobile selon l'une des revendications précédentes,
**caractérisé en ce que**
le corps de refroidissement est réalisé et installé pour être insuffisant pour le refroidissement simultané permanent de la source de lumière défléchie (ALQ) activée et de la source de lumière infrarouge (ISQ) activée.

10. Projecteur de véhicule automobile selon l'une des revendications précédentes,
**caractérisé en ce que**
la source de lumière défléchie (ALQ) n'est pas toujours activée lorsque la source de lumière infrarouge (ISQ) est activée.

11. Projecteur de véhicule automobile selon l'une des revendications précédentes,
**caractérisé en ce que**
la première partie ou la seconde partie du système optique font chacune partie intégrante de la source de lumière défléchie (ALQ) ou de la source de lumière infrarouge (ISQ), ou sont reliées solidairement à la source de lumière défléchie (ALQ) ou à la source de lumière infrarouge (ISQ).

12. Projecteur de véhicule automobile selon l'une des revendications précédentes,
**caractérisé en ce que**
la source de lumière défléchie (ALQ) et/ou la source de lumière infrarouge (ISQ) comprennent au moins deux parties de source de lumière défléchie (ALQ) ou deux parties de source de lumière infrarouge (ISQ).
